# FASCICULE DE BREVET EUROPEEN

(11) **EP 1 347 874 B1**
(45) Date de publication et mention de la délivrance du brevet: **26.04.2006**
(21) Numéro de dépôt: 01988056.6
(22) Date de dépôt: 21.12.2001
(51) Int. Cl.: B29D 30/24

(54) **TAMBOUR D'ASSEMBLAGE POUR LA FABRICATION DE PNEUMATIQUES**
REIFENAUFBAUTROMMEL
ASSEMBLY DRUM FOR MANUFACTURING TYRES

(30) Priorité: 29.12.2000 FR 0017346
(43) Date de publication de la demande: 01.10.2003
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: AUCLAIR, Jacques, F-63800 Cournon d'Auvergne (FR); MACHEFFE, Daniel, F-63960 Veyre Monton (FR)
(74) Mandataire: Bauvir, Jacques
(86) Numéro de dépôt international: PCT/EP2001/015188
(87) Numéro de publication internationale: WO 2002/053355

(56) Documents cités:
- EP-A- 0 342 145
- WO-A-00/26043
- DE-A- 1 579 257
- FR-A- 1 243 173
- US-A- 2 699 198
- US-A- 3 959 064

## Description

La présente invention concerne un tambour d'assemblage pour la fabrication de pneumatiques.

L'invention concerne plus particulièrement la fabrication de pneumatiques tels que ceux utilisés dans les avions ou dans certains poids lourds, qui comprennent une armature de carcasse possédant plusieurs nappes de renforcement appelées couramment nappes carcasse et plusieurs, tringles de renforcement dans chacun des bourrelets du pneumatique, une des armatures de carcasse étant enroulée autour de chaque tringle en formant un retournement. Cependant, il apparaîtra clairement dans ce qui suit que l'invention peut aussi bien s'appliquer à la fabrication de pneumatique ne possédant qu'une tringle de renforcement ou ne possédant aucune tringle de renforcement.

Une des difficultés de fabrication de tels pneumatiques ayant de multiples tringles réside dans les mises en place successives sur un tambour d'assemblage des nappes carcasse et des tringles tout en réalisant les multiples retournements. A cette fin, on utilise généralement des tambours d'assemblage possédant des épaulements sur lesquels la ou les tringles sont déposées au cours de l'assemblage par une approche latérale sur lesdits épaulements, la difficulté résidant dans le maintien des produits au contact de ces épaulements.

Notons que de tels tambours peuvent utiliser directement des tringles ou des produits semi-finis fabriqués à part et pouvant être constitués par la tringle surmontée radialement d'un profilé de mélange caoutchouteux. Dans la suite, on nommera complexe-tringle : une tringle seule ou une tringle surmontée d'un profilé de mélange caoutchouteux, comportant éventuellement en outre un produit d'enrobage de la tringle tel qu'un autre profilé de mélange caoutchouteux ou une nappe de caoutchouc comprenant des câbles.

Certaines solutions reposent sur l'utilisation en association avec le tambour de dispositif de maintien des produits à assembler sur le tambour. Ainsi, la publication US-2 605 198 décrit un tambour d'assemblage avec des épaulements, non expansible, qui possède un tel dispositif. Lors de l'assemblage, une première nappe carcasse préalablement étirée, est posée sur le tambour, ses extrémités périphériques étant simplement rabattues à l'aide d'un dispositif de rouletage vers l'intérieur du tambour.

Les complexes-tringle sont amenés par des dispositifs déplaçables axialement par rapport au tambour afin d'être placés au contact de la nappe carcasse respectivement sur chaque épaulement et maintenus en place grâce à ce même dispositif. Ce maintien en position des complexes tringle est indispensable pour assurer le contact des extrémités périphériques de la nappe carcasse avec les épaulements. L'opération est identique pour l'amenée de chaque complexe-tringle, ce qui rend particulièrement délicate l'étape de retournement de chaque nappe carcasse sur le complexe-tringle correspondant. En effet, il faut alors maintenir la position axiale du complexe-tringle, en plus de sa position radiale, pour assurer l'appui sur les épaulements de l'ensemble des nappes et complexes-tringle déjà en place, tout en réalisant le nouveau retournement précisément.
L'usage du vide est connu pour maintenir des profilés caoutchouteux après conformation sur la surface fixe d'un anneau de transfert, soit axialement tel que divulgué dans la publication FR-A-1243173, soit radialement tel que divulgué dans la publication FR-A-1383167, ceci dans le but d'appliquer ultérieurement ces produits sur une forme de confection.

D'autres solutions consistent afin de simplifier et de rendre plus précise les étapes de retournement de nappe carcasse autour de tringle, à utiliser un tambour dans lequel les épaulements sont constitués par des pièces rapportées par rapport au tambour, susceptibles d'être démontées facilement. En effet, on réalise dans ce cas un collage des extrémités périphériques de la première nappe carcasse sur les épaulements du tambour, ce qui règle le problème du maintien axial des produits contre lesdits épaulements. C'est alors l'opération d'extraction du pneumatique qui devient problématique et il est nécessaire de procéder pour chaque pneumatique cru assemblé au démontage des épaulements du tambour. Il est clair que ce procédé ne peut être que manuel.

La publication DE-A-1 579 257 fait état d'un tambour comportant des épaulements déplaçables axialement et radialement actionnés par des biellettes coopérant avec un anneau mobile externe.

L'objet de la présente invention est résolu par un tambour d'assemblage selon la revendication 1.

Cette disposition permet de réaliser un tambour sans dispositif supplémentaire, dans lequel la rétraction du tambour pour ôter le pneumatique assemblé ne nécessite pas de procéder à un démontage, les moyens de maintien permettant par ailleurs de réaliser le maintien des produits constitutifs du pneumatique au contact des épaulements lors de l'assemblage.

D'autres caractéristiques et avantages de l'invention apparaîtront à la lecture d'un exemple de réalisation d'un tambour d'assemblage et de son procédé de mise en oeuvre conforme à l'invention en référence au dessin annexé dans lequel :
- les figures 1A et 1B sont des demi-coupes axiales du tambour conforme à l'invention respectivement en position de travail du tambour et en position rétractée du tambour,

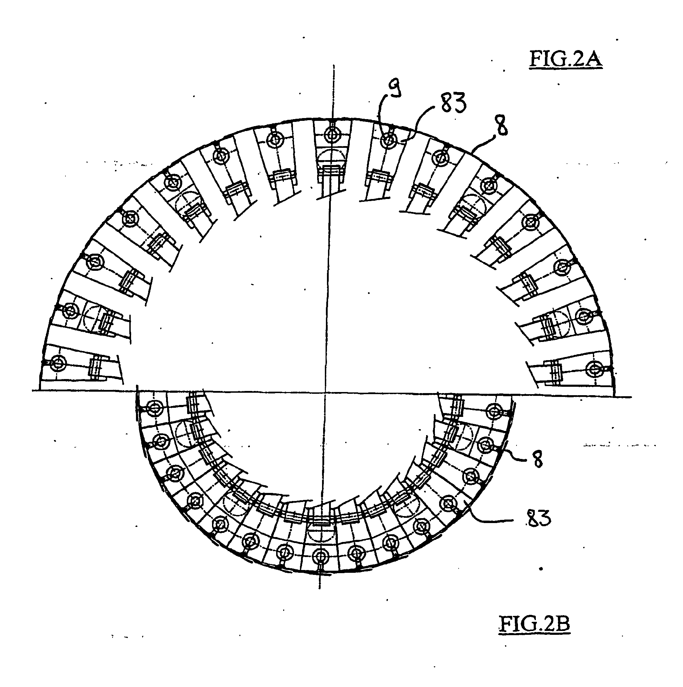

- les figures 2A et 2B sont des demi-coupes radiales du tambour conforme à l'invention selon la ligne II-II représentée sur les figures 1A et 1B.

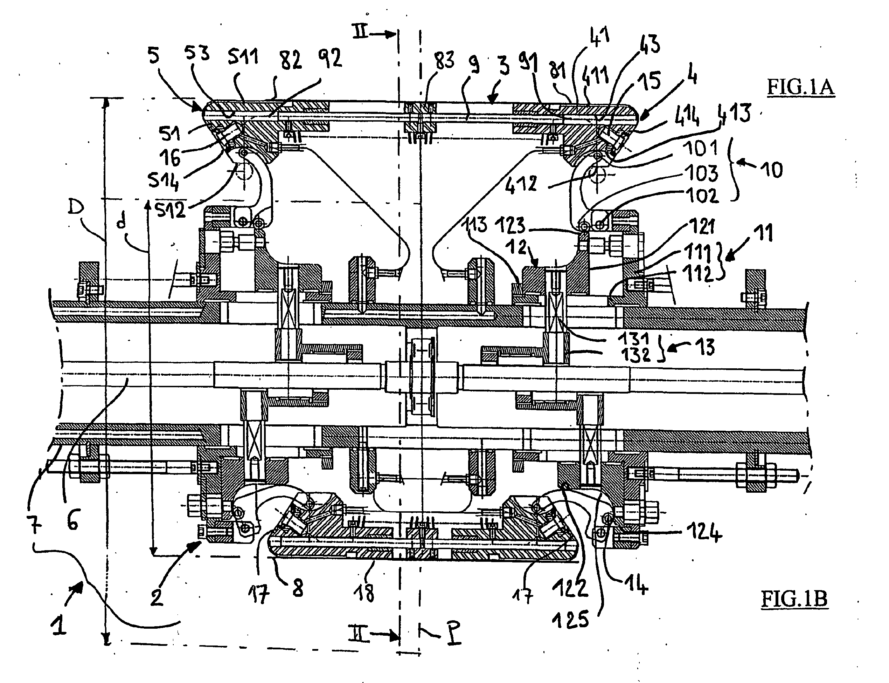

Selon la figure 1A, le tambour 1 comporte un corps 2 présentant une surface de réception 3 généralement cylindrique des produits à assembler et des épaulements 4 et 5, le corps 2 étant monté sur un arbre central 6 constitué par une vis par l'intermédiaire d'un fût 7.

Le tambour 1 présente deux positions radiales différentes :
- une position rétractée (correspondant à l'extraction d'un pneumatique) dans laquelle le diamètre de la surface de réception 3 est minimale, d, et dans laquelle les épaulements 4 et 5 sont axialement dans une position rapprochée l'un vis-à-vis de l'autre,
- et une position de travail ou position expansée dans laquelle est réalisé l'assemblage des produits constitutifs du pneumatique où la surface de réception 3 a un diamètre D très supérieur et où les épaulements 4 et 5 sont beaucoup plus éloignés axialement l'un de l'autre.

En effet, les épaulements 4 et 5 sont respectivement constitués par des éléments latéraux 41 et 51 juxtaposés en position rétractée du tambour 1 et répartis régulièrement sur toute la circonférence du tambour. Chaque élément 41 (51) a une forme sensiblement trapézoïdale vue en coupe axiale, l'une des bases 411 (511) du trapèze constituant partiellement la surface de réception 3 alors que l'autre base 412 (512) permet la liaison et l'articulation desdits éléments 41 (51) par rapport au fût 7, comme on le verra plus en détails dans ce qui suit. Les surfaces 414 (514) de chaque élément définissant les épaulements 4 et 5.

La surface de réception 3 est ainsi constituée par les surfaces 411 et 511 et par la surface de tuiles 8 qui s'étendent entre les surfaces 411 et 511, leurs extrémités 81 et 82 recouvrant partiellement lesdites surfaces. Chaque tuile 8 est portée par un support 83 solidaire de cette dernière, qui est lui-même traversé par une tige 9 dont chaque extrémité 91 (92) coulisse dans un alésage 43 (53) correspondant porté par chaque élément latéral 41 (51) en vis-à-vis de sorte que les extrémités 91 et 92 des tiges soient toujours engagées dans les alésages 43 et 53 quelle que soit la position du tambour 1.

Le nombre de tuiles 8 correspond donc au nombre d'éléments latéraux respectivement 41 et 51, les tuiles se chevauchant fortement les unes les autres en position rétractée du tambour 1 et se chevauchant légèrement les unes les autres en position expansée dudit tambour. Il est clair que les tuiles 8 sont solidaires des déplacements radiaux des éléments latéraux 41 et 51.

Certains éléments latéraux 41 (51) portent des valves à vide 15 (16) débouchant sur la surface 414 (514) afin de permettre lorsqu'elles sont mises en action de maintenir les produits posés sur ces épaulements. Il n'est pas nécessaire de positionner une telle valve dans chaque élément, on peut se contenter d'en répartir régulièrement par exemple tous les trois ou quatre éléments latéraux. Les conduits permettant d'opérer le vide, reliés à ces valves, passent à l'intérieur du tambour. Cette disposition permet d'éviter le collage ou la mise en place de dispositif mécanique de maintien des produits en position sur le tambour, et en combinaison avec les moyens de rétraction du tambour qui seront détaillés plus loin, elle permet l'extraction aisée d'un pneumatique une fois assemblé sur le tambour.

Chaque élément latéral 41 (51) est recouvert d'un premier manchon 17, un deuxième manchon 18 recouvrant l'ensemble de la surface de réception 3.

Les éléments latéraux 41 formants l'épaulement 4 et leur articulation et les éléments latéraux 51 formants l'épaulement 5 avec leur articulation étant identiques et symétriques par rapport au plan radial passant par le centre du tambour, on se limitera à décrire en détails la liaison et l'articulation d'un élément latéral 41 par rapport au fût 7.

Sur la base 412 de chaque élément latéral 41 est montée pivotante l'extrémité 101 d'une biellette 10 selon la trajectoire formée par une rainure 413 sous forme d'un arc de cercle de sorte que le pivotement de cette extrémité 101 de la biellette provoque un mouvement de déplacement axial et latéral de l'élément 41 qui garde ainsi la même orientation.

L'autre extrémité 102 de chaque biellette 10 est articulée sur le bord périphérique extérieur d'un anneau 111 solidaire d'un support annulaire 11 monté rigidement sur le fût 7. Ce support annulaire 11 est en fait fixé sur le fût 7 par un système de vis écrou qui peut permettre son déplacement axial en fonction de la dimension du pneumatique à assembler.

Le support 11 possède en plus de cette partie annulaire 111, une partie cylindrique 112 située axialement à l'intérieur du tambour 1 par rapport à cet anneau 111, sur laquelle est monté à translation axiale un coulisseau 12 et qui porte une butée 113 limitant le déplacement dudit coulisseau vers l'intérieur du tambour 1.

Le coulisseau 12 est actionné par l'intermédiaire d'un doigt de transmission 131 s'étendant dans la direction radiale et placé dans un logement 14 porté par ledit coulisseau. Ce doigt 131 est monté sur un système vis à bille 13 dont le boîtier 132 est porté par l'arbre central 6, de sorte que l'arbre 6 est motorisé par deux motorisations permettant de façon indépendante de réaliser le déplacement du boîtier 132 afin de commander le déplacement axial du coulisseau 12. ou de mettre en rotation l'ensemble du tambour 1 autour de son axe. Le coulisseau 12 est ainsi déplaçable entre une position où l'une de ses surfaces 121 est au contact de l'anneau 111 et une position où ladite surface 121 est axialement espacée de l'anneau 111. Il est clair que l'on pourrait envisager d'autres moyens d'actionnement du coulisseau 12 tel que l'utilisation d'un vérin.

Le bord périphérique du coulisseau 12 disposé à l'extrémité radialement extérieure de la surface 121 par rapport au centre du tambour, constitue une came 123 d'actionnement de chaque biellette 10. En effet la came 123 coopère avec un galet 14 porté par un coude 103 formé sur chaque biellette 10, ledit bord se terminant radialement vers l'extérieur par une surface cylindrique 124 de butée « haute » de chaque biellette 10. Le profil de cette came est réalisé en fonction de la vitesse souhaitée de montée du tambour vers sa position de travail.

Le coulisseau 12 porte également, situé axialement vers l'intérieur du tambour, un dégagement 125 permettant le positionnement de chaque biellette 10 à son contact en position rétractée du tambour.A cet effet, le coulisseau 12 porte au niveau de ce dégagement 125 une surface cylindrique 122, radialement et axialement plus proche du centre du tambour que la surface 124, de butée « basse » de chaque biellette 10.

Sans sortir du cadre de l'invention, on peut envisager d'autres systèmes de commande des biellettes 10 comme, par exemple, un système pignon crémaillère.

On décrira très succinctement dans ce qui suit le fonctionnement du tambour pour passer de sa position rétractée à sa position de travail, et inversement en s'attachant au côté du tambour 1 situé à droite de son plan de symétrie P représenté sur les figures 1A et 1B, le reste se déduisant par symétrie par rapport audit plan P.

Le doigt de transmission 131 étant dans sa position la plus éloignée axialement du centre du tambour, le coulisseau 12 est au contact de l'anneau 111 par sa surface 121 et chaque biellette 10 est en position de repos c'est-à-dire que son extrémité 101 est dans sa position radiale la plus proche du centre du tambour 1, une partie de la biellette 10 étant en butée sur la surface 122 du coulisseau 12. Le tambour est ainsi en position rétractée, les éléments 41 étant axialement et radialement au plus près du centre du tambour.

En actionnant la motorisation de l'arbre 6 relative au système vis à billes, le coulisseau 12 entraîné par le doigt de transmission 13 se déplace axialement en s'écartant de l'anneau 111 en coulissant sur la surface 112 du support 11. Ce mouvement rompt le contact entre chaque biellette 10 et la surface de butée 122 et permet l'articulation de chaque biellette. Le galet 14 de chaque biellette 10 suit ainsi la came 123 jusqu'à ce qu'il atteigne la surface cylindrique 124 qui arrête sa course alors que l'autre extrémité 101 de chaque biellette en coopérant avec la rainure 413 entraîne dans son articulation le déplacement axial et radial vers l'extérieur du tambour de chaque élément 41.

Les coudes 103 des biellettes 10 reposant par l'intermédiaire des galets 14 sur la surface cylindrique 124 déterminent la position de travail du tambour dans laquelle les éléments latéraux 41 sont radialement et axialement le plus éloignés du centre du tambour 1.

## Revendications

1. Tambour d'assemblage pour la fabrication de pneumatique, ayant
- un corps (2) monté sur un arbre central (6) et présentant une surface de réception (3) généralement cylindrique des produits à assembler,
- des épaulements (4, 5) comprenant une pluralité d'éléments latéraux (41, 51) répartis régulièrement sur la circonférence du tambour,
- lesdits épaulements (4, 5) étant déplaçables axialement et radialement par rapport à un support fixé sur un fût (7) du tambour centré sur l'arbre central (6) par l'intermédiaire de biellettes (10) coopérant avec une came d'actionnement (123) portée par un coulisseau (12) translatable axialement sur le fut (7) du tambour (1) entre une position rétractée du tambour (1) dans laquelle la surface de réception (3) présente un diamètre et une longueur axiale minimum et une position de travail dudit tambour dans laquelle le diamètre et la longueur axiale de la surface de réception (3) sont très supérieurs à ceux de la position rétractée,
**caractérisé en ce que** chaque épaulement porte des moyens de maintien des produits constitutifs du pneumatique au contact desdits épaulements constitués par des valves à vide (15, 16) disposées à l'intérieur d'un élément latéral (41, 51) et débouchant extérieurement sur la surface latérale (414, 514) de ce dernier.

2. Tambour selon la revendication 1 dans lequel les surfaces latérales (414 et 514) des éléments latéraux (41, 51) prolongent la surface de réception (3) radialement et axialement vers l'intérieur du tambour.

3. Tambour selon la revendication 1, dans lequel les épaulements (4, 5) sont déplaçables de façon synchronisée de sorte à s'éloigner ou se rapprocher l'un de l'autre.

4. Tambour selon la revendication 1, dans lequel les déplacements axiaux et radiaux de chaque épaulement (4, 5) sont simultanés.

5. Tambour selon l'une quelconque des revendications 1 à 4, dans lequel chaque épaulement (4, 5) comporte plusieurs valves à vide (15) respectivement réparties régulièrement sur la circonférence du tambour (1) et disposée chacune dans un des éléments latéraux (41, 51) constitutifs dudit épaulement de manière à maintenir les produits constitutifs du pneumatique en contact avec les surfaces latérales (414, 514) desdits éléments latéraux.

6. Tambour selon l'une quelconque des revendications 1 à 5, dans lequel la partie centrale de la surface de réception (3) est constituée par des tuiles (8) superposées partiellement les unes aux autres en position rétractée du tambour (1) et solidaires en déplacement des épaulements (4, 5).

## Patentansprüche

1. Aufbautrommel zur Herstellung von Luftreifen, mit
- einem Körper (2), der auf eine zentrale Welle (6) montiert ist und eine allgemein zylindrische Aufnahmefläche (3) für die zusammenzubauenden Produkte aufweist,
- Schultern (4, 5), die mehrere seitliche Elemente (41, 51) aufweisen, die gleichmäßig auf dem Umfang der Trommel verteilt sind,
- wobei die Schultern (4, 5) bezüglich eines an einem auf die zentrale Achse (6) zentrierten Schaft (7) der Trommel befestigten Trägers mit Hilfe von Schwingarmen (10) axial und radial verschiebbar sind, die mit einer Betätigungsnocke (123) zusammenwirken, die von einem Schlitten (12) getragen wird, der axial in Translationsrichtung auf dem Schaft (7) der Trommel (1) zwischen einer zusammengezogenen Stellung der Trommel (1), in der die Aufnahmefläche (3) einen minimalen Durchmesser und eine minimale axiale Länge aufweist, und einer Arbeitsstellung der Trommel verschoben werden kann, in der der Durchmesser und die axiale Länge der Aufnahmefläche (3) sehr viel größer sind als diejenigen der zusammengezogenen Stellung,
**dadurch gekennzeichnet, dass** jede Schulter Mittel zum Halt der den Luftreifen bildenden Produkte in Kontakt mit den Schultern trägt, die aus Vakuumventilen (15, 16) bestehen, die im Inneren eines seitlichen Elements (41, 51) angeordnet sind und außen an der seitlichen Fläche (414, 514) dieses letzteren münden.

2. Trommel nach Anspruch 1, bei der die Seitenflächen (414 und 514) der seitlichen Elemente (41, 51) die Aufnahmefläche (3) radial und axial zur Innenseite der Trommel verlängern.

3. Trommel nach Anspruch 1, bei der die Schultern (4, 5) synchron verschoben werden können, um sich voneinander zu entfernen oder einander anzunähern.

4. Trommel nach Anspruch 1, bei der die axialen und radialen Verschiebungen jeder Schulter (4, 5) gleichzeitig erfolgen.

5. Trommel nach einem der Ansprüche 1 bis 4, bei der jede Schulter (4, 5) mehrere Vakuumventile (15) aufweist, die gleichmäßig über den Umfang der Trommel (1) verteilt und je in einem der die Schulter bildenden seitlichen Elemente (41, 51) angeordnet sind, um die den Luftreifen bildenden Produkte mit den Seitenflächen (414, 514) der seitlichen Elemente in Kontakt zu halten.

6. Trommel nach einem der Ansprüche 1 bis 5, bei der der zentrale Bereich der Aufnahmefläche (3) von Platten (8) gebildet wird, die in der zusammengezogenen Stellung der Trommel (1) teilweise übereinander liegen und zusammen mit den Schultern (4, 5) verschoben werden.

## Claims

1. Assembly drum for tyre manufacture having
- a body (2) mounted on a central shaft (6) and having a generally cylindrical surface (3) for receiving the products to be assembled,
- shoulders (4, 5) comprising a plurality of lateral elements (41, 51) distributed regularly over the surface of the drum,
- the said shoulders (4, 5) being able to move axially and radially with respect to a support fixed to a barrel (7) of the drum centred on the central shaft (6) by means of rocker arms (10) co-operating with an actuating cam (123) carried by a slide (12) able to move in translation axially on the barrel (7) of the drum (1) between a retracted position of the drum (1) in which the reception surface (3) has a minimum diameter and axial length and a working position of the said drum in which the diameter and axial length of the reception surface (3) are very much greater than those in the retracted position,
**characterised in that** each shoulder carries means of holding the products making up the tyre in contact with the said shoulders consisting of vacuum valves (15, 16) disposed inside a lateral element (41, 51) which opens out externally on the lateral surface (414, 514) of the latter.

2. Drum according to Claim 1, in which the lateral surfaces (414 and 514) of the lateral elements (41, 51) extend the reception surface (3) radially and axially towards the inside of the drum.

3. Drum according to Claim 1, in which the shoulders (4, 5) are able to move in a synchronised fashion so as to move further away from or closer to each other.

4. Drum according to Claim 1, in which the axial and radial movements of each shoulder (4, 5) are simultaneous.

5. Drum according to any one of Claims 1 to 4, in which each shoulder (4, 5) has several vacuum valves (15) respectively distributed regularly over the circumference of the drum (1) and each disposed in one of the lateral elements (41, 51) making up the said shoulder so as to keep the products making up the tyre in contact with the lateral surfaces (414, 514) of said lateral elements.

6. Drum according to any one of Claims 1 to 5, in which the central part of the reception surface (3) consists of tiles (8) partially superimposed on each other in the retracted position of the drum (1) and integral in movement with the shoulders (4, 5).
